# EUROPEAN PATENT SPECIFICATION

(11) **EP 3 089 130 B1**
(45) Date of publication and mention of the grant of the patent: **28.03.2018**
(21) Application number: 16165891.9
(22) Date of filing: 18.04.2016
(51) Int. Cl.: G08B 13/196

(54) **MONITORING SYSTEM AND METHOD FOR COMBINING DETECTOR AND CAMERA OUTPUTS**
ÜBERWACHUNGSSYSTEM UND -VERFAHREN ZUR KOMBINATION VON DETEKTOR- UND KAMERA-AUSGANGSSIGNALEN
SYSTÈME DE SURVEILLANCE ET PROCÉDÉ PERMETTANT DE COMBINER DES SIGNAUX DE SORTIE DE DÉTECTEUR ET CAMÉRA

(30) Priority: 29.04.2015 US 201514699116
(43) Date of publication of application: 02.11.2016
(73) Proprietor: Honeywell International Inc., Morris Plains, NJ 07950 (US)
(72) Inventor: DIVAKARA, Manjunatha, Morris Plains, NJ New Jersey 07950 (US); GANESAN, Balamurugan, Morris Plains, NJ New Jersey 07950 (US)
(74) Representative: Houghton, Mark Phillip

(56) References cited:
- US-A1- 2008 101 789
- US-A1- 2009 167 862
- US-A1- 2009 295 923
- US-A1- 2011 157 431

## Description

### FIELD

The application pertains to regional monitoring systems which incorporate signals from different types of security devices. More particularly, it pertains to such systems and methods which respond to both signals from various types of sensors, or detectors, and camera images of the region where the sensors or detectors are located.

### BACKGROUND

Secured premises can be expected to include different zones like entry/ exit, perimeter, and interior followers. Zones can exhibit different behaviors corresponding to an armed or disarmed state of a system control panel. Entry/exit zones are monitored by door contacts. Perimeter zones are monitored by window transmitters. Interior followers are monitored by motion detectors. Modern day secured premises mostly are often equipped with one or more cameras along with the different security sensors as mentioned above.

Despite the presence of installed monitoring systems, security related issues can still persist. There are various scenarios when the sensors are bypassed because they are not working properly and are in need of maintenance. This leaves the premises vulnerable to security attacks.

The sensors deployed at secured premises will sometimes cause false alarms due to environmental and external noisy situations. False alarms are annoying to end users of the premises. Hard coded configuration parameters like exit delays may not, at times, be sufficient. Currently they do not adapt to dynamic conditions. The video systems which are present with cameras operate independently and do not work in collaboration with installed intrusion sensors. However, one regional monitoring system where the camera works in collaboration with a condition detector is known from US 2008/0 101 789 A1.

### SUMMARY OF THE INVENTION

The present invention is defined by the appended claims.

### BRIEF DESCRIPTION OF THE DRAWINGS

Fig. 1 is a block diagram illustrating aspects of a system in accordance herewith;
Fig. 2 is another block diagram illustrating additional aspects of the system of Fig. 1;
Fig. 3 is a flow diagram illustrating confirmatory alarm processing; and
Fig. 4 is a flow diagram which illustrates cross zone processing.

### DETAILED DESCRIPTION

While disclosed embodiments can take many different forms, specific embodiments thereof are shown in the drawings and will be described herein in detail with the understanding that the present disclosure is to be considered as an exemplification of the principles thereof as well as the best mode of practicing same, and is not intended to limit the application or claims to the specific embodiment illustrated.

In accordance with a disclosed embodiment, it is possible to map the spatial coordinates in an image captured by camera to the different response types like entry/exit, perimeter and interior follower. Thus it is possible to get the intrusion response type actions for the activities observed or analyzed through video analytics with-in the mapped spatial coordinates. In other words particular spatial coordinates in an image can act like a motion detector; or in other regions can act like a window transmitter.

In one aspect, it is possible to reduce false alarms by verifying an image within selected spatial coordinates with applied video analytics.

In yet another aspect, it is possible that configured parameters like exit delays may be dynamically modified by using the image analytics. A user's exit time through a door can be increased by detecting that the user is approaching the exit door slowly and needs extended exit delay time. This is an advantage made available by coordinating camera outputs with other types of detectors.

Further, when the zones are bypassed, the camera image captured in the mapped spatial coordinates can be used to provide the functionality of the bypassed zone. For example, if the window transmitter is bypassed then the spatial coordinates of the camera image can run the video analytics for the activity in the window region of the house or monitored region to provide the perimeter zone functionality.

Advantageously, in accordance herewith, it is possible to cross zone the intrusion sensors with the spatial coordinates of an image captured by the camera. The intrusion activity can be detected by intrusion sensors by verification with the analytics on the image in the respectively mapped spatial coordinates.

In summary, as discussed below, embodiments hereof provide for mapping the different spatial coordinates to different intrusion response types and other related uses.

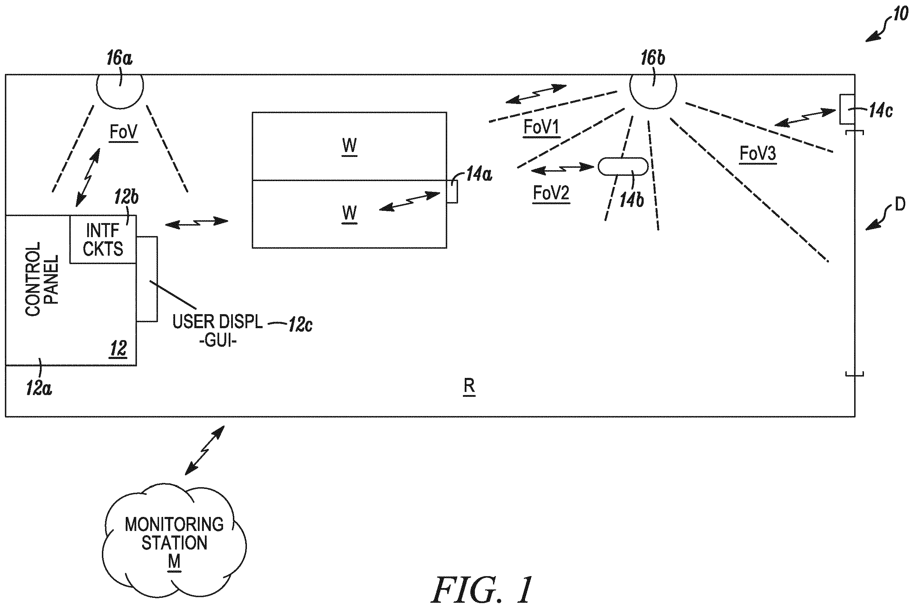

Fig. 1 illustrates a combination 10 in accordance with an embodiment hereof. In Fig. 1, a region R is being monitored by a security system which includes a control panel 12. The panel 12 includes control circuits 12a, interface circuits 12b coupled to the control circuits 12a, and a user interface which could be implemented as a graphical user interface 12c.

The control panel 12 communicates with a plurality of monitoring devices, or detectors such as window detector 14a, which could detect glass breakage. A motion sensor, such as a passive infrared detector 14b can detect motion through the adjacent region R. A door sensor 14c can respond to a door D being opened or closed.

One or more security cameras such as 16a, 16b can be installed in the region R, and coupled to the panel 12. The cameras, such as 16a can have a variable field-of-view, FOV. As illustrated with respect to camera 16b, fields-of-view FOV1, FOV2, FOV3 can be established by camera movement under the control of panel 12 as would be understood by those of skill in the art.

The panel 12 ca be in wired or wireless communication with the various detectors 14i as well as the cameras 16i. As described below, a condition sensed by window W can cause the panel 12 to direct camera 16a to move its FOV so that the window W falls within that FOV. Similarly, the FOV of camera 16b can be moved to bring the interior movement detector 14b, or the door D into that FOV.

An optical determination can be made, in combination with detector outputs, at panel 12. The results can be forwarded to a monitoring station M.

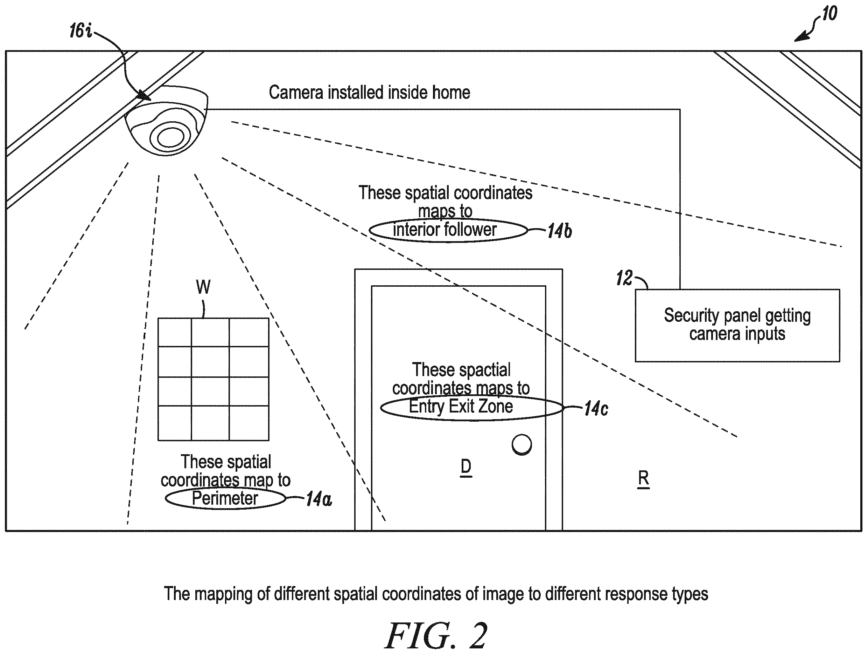

Relative to Figs. 1, 2 different spatial coordinates can be assigned to different intrusion response types. The spatial coordinates of the image in the door can be mapped to an entry/exit response type by the control panel 12. Similarly, the coordinates of the window W can be mapped by the control panel 12 to the perimeter response type of action. The control panel 12, upon detection of any activity within these regions of interest found using the video analytics, could act, in conjunction with the respective window, motion or door detector, to trigger the respective intrusion actions.

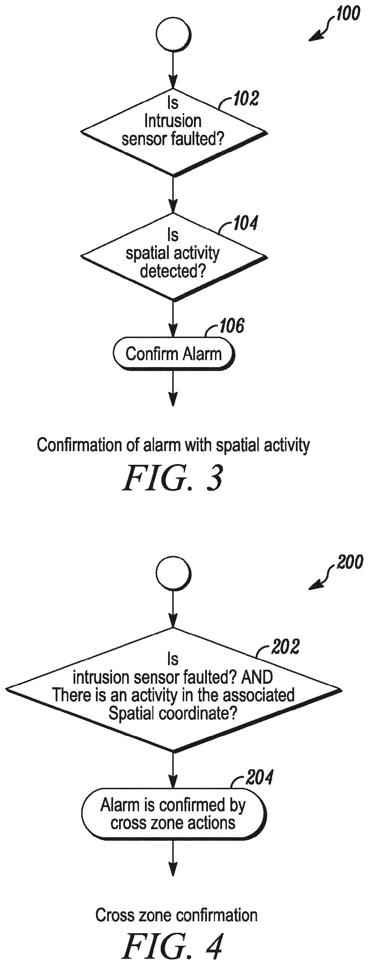

Fig. 3 is a diagram illustrating a process 100 of confirmation of an alarm with spatial activity from a selected camera. When the panel 12 detects a faulted sensor or detector (such as 14a, 14b, or 14c) as at 102 the FOV of a nearby camera, such as 16a, 16b can be directed toward the respective detector, as at 104. Where the respective camera couples appropriate spatial activity to the panel 12, an alarm condition can be confirmed, as at 106.

In another instance, an exit delay is adjustable such that, it would be sufficiently long for a user to exit the premises after arming the panel. The exit delay can be terminated after confirming that the user has exited the region R through the door D. The exit of the user can be confirmed by the activity within the spatial coordinates mapped for the entry exit response type area.

Sometimes the intrusion zones are bypassed and armed. The bypassing may be due to faulty sensors. In this instance, the camera spatial coordinates can work like a sensor which is bypassed. For example if the window transmitter is bypassed, the spatial coordinates associated with the window sensor can be monitored for the activities using the video analytics to work like a perimeter zone.

Finally, with respect to Fig. 4, in a process 200 the spatial coordinates can be used to implement cross zone confirmation for each of the intrusion detectors, or, sensors within the view of camera. The activities confirmed with camera view can trigger the alarms in the security system. As in Fig, 4, where one of the intrusion detectors, or sensors, has faulted, and there is a predetermined type of activity associated with the respective spatial coordinates, as at 202, the alarm can be confirmed by information from various types of detectors, or sensors as at 204.

As described, above, a regional monitoring system includes a plurality of condition detectors coupled to an alarm system control panel. At least one camera is coupled to the control panel. In response to a potential alarm indicating signal, or, indicator from one of the detectors, the control panel obtains location information for the respective detector, and directs the field of view of the camera to include the location of the detector. An alarm condition can be determined in response to the images from the camera in combination with outputs from the respective detector.

Further, logic flows depicted in the figures do not require the particular order shown, or sequential order, to achieve desirable results. Other steps may be provided, or steps may be eliminated, from the described flows, and other components may be added to, or removed from the described embodiments.

## Claims

1. A regional monitoring system comprising:
a condition detector (14), wherein the condition detector is located at a location;
a camera (16) having a field of view; and
a regional control element (12) that receives a signal from the condition detector and a signal from the camera,
wherein, responsive to an alarm condition sensed at the condition detector, the regional control element directs the field of view of the camera to include the location and performs video analytics on an image of the location captured by the camera to detect activity at the location to confirm the alarm condition detected by the condition detector.

2. The monitoring system as in claim 1 wherein the condition detector is selected from a class that includes at least position detectors, window detectors, and motion detectors.

3. The monitoring system as in claim 1 wherein the regional control element determines the location for the condition detector and activates the camera to provide the image of the location.

4. The monitoring system as in claim 1 wherein the image of the location is provided to the regional control element.

5. The monitoring system as in claim 1 wherein the regional control element retrieves detector coordinates for the condition detector and directs the camera's field of view to include the condition detector based on the detector coordinates.

6. The monitoring system as in claim 5 wherein the camera confirms a presence of the alarm condition detected by the condition detector prior to issuance of an alarm indicating output.

7. The monitoring system as in claim 1 wherein the condition detector is associated with a type of response, and wherein the type of response includes an entry/exit response type, a perimeter response type, or an alarm confirmation response type.

8. The monitoring system as in claim 1 further comprising a plurality of cameras coupled to the regional control element.

9. A method comprising:
providing a condition detector (14), wherein the condition detector is located at a location;
providing a camera (16);
responding to an alarm signal from the condition detector;
obtaining, via the camera, an image of the location of the condition detector; and
performing video analytics on the image to detect activity at the location to confirm an alarm condition detected by the condition detector.

10. The method as in claim 9 further comprising associating the location with the condition detector.

11. The method as in claim 9 further comprising providing a confirmation of the alarm condition detected by the condition detector based on the video analytics performed on the image.

## Patentansprüche

1. Regionales Überwachungssystem, das Folgendes umfasst:
einen Zustandsdetektor (14), wobei der Zustandsdetektor an einem Ort angeordnet ist;
eine Kamera (16) mit einem Sichtfeld; und
ein regionales Bedienungselement (12), das ein Signal vom Zustandsdetektor und ein Signal von der Kamera empfängt,
wobei das regionale Bedienungselement als Antwort auf einen am Zustandsdetektor erkannten Alarmzustand das Sichtfeld der Kamera so ausrichtet, dass der Ort darin enthalten ist, und an einem Bild von dem durch die Kamera erfassten Ort eine Videoanalyse durchführt, um eine Aktivität an dem Ort zu detektieren, um den durch den Zustandsdetektor detektierten Alarmzustand zu bestätigen.

2. Überwachungssystem nach Anspruch 1, wobei der Zustandsdetektor aus einer Klasse, die mindestens Positionsgeber, Fensterdetektoren und Bewegungsmelder enthält, ausgewählt ist.

3. Überwachungssystem nach Anspruch 1, wobei das regionale Bedienungselement den Ort für den Zustandsdetektor ermittelt und die Kamera aktiviert, um das Bild von dem Ort bereitzustellen.

4. Überwachungssystem nach Anspruch 1, wobei das Bild von dem Ort für das regionale Bedienungselement bereitgestellt wird.

5. Überwachungssystem nach Anspruch 1, wobei das regionale Bedienungselement Detektorkoordinaten für den Zustandsdetektor abruft und das Sichtfeld der Kamera basierend auf den Detektorkoordinaten so ausrichtet, dass der Zustandsdetektor darin enthalten ist.

6. Überwachungssystem nach Anspruch 5, wobei die Kamera das Vorliegen des durch den Zustandsdetektor detektierten Alarmzustands vor der Ausgabe einer Alarmanzeigemeldung bestätigt.

7. Überwachungssystem nach Anspruch 1, wobei der Zustandsdetektor mit einem Antworttyp assoziiert ist und wobei der Antworttyp einen Eingangs-/ Ausgangsantworttyp, einen Randantworttyp oder einen Alarmbestätigungsantworttyp enthält.

8. Überwachungssystem nach Anspruch 1, das ferner eine Vielzahl von an das regionale Bedienungselement gekoppelten Kameras umfasst.

9. Verfahren, das Folgendes umfasst:
Bereitstellen eines Zustandsdetektors (14), wobei der Zustandsdetektor an einem Ort angeordnet ist;
Bereitstellen einer Kamera (16);
Antworten auf ein Alarmsignal vom Zustandsdetektor;
Erhalten eines Bilds von dem Ort des Zustandsdetektors über die Kamera; und
Durchführen einer Videoanalyse am Bild, um eine Aktivität an dem Ort zu detektieren, um einen durch den Zustandsdetektor detektierten Alarmzustand zu bestätigen.

10. Verfahren nach Anspruch 9, das ferner Assoziieren des Orts mit dem Zustandsdetektor umfasst.

11. Verfahren nach Anspruch 9, das ferner Bereitstellen einer Bestätigung des durch den Zustandsdetektor detektierten Alarmzustands basierend auf der am Bild durchgeführten Videoanalyse umfasst.

## Revendications

1. Système de surveillance par zone comprenant :
un détecteur de condition (14),
le détecteur de condition étant situé au niveau d'un emplacement ;
un appareil de prise de vues (16) possédant un champ de vision ; et
un élément de commande par zone (12) qui reçoit un signal en provenance du détecteur de condition et un signal provenant de l'appareil de prise de vues,
dans lequel, en réponse à une condition d'alarme détectée au niveau du détecteur de condition, l'élément de commande par zone dirige le champ de vision de l'appareil de prise de vues pour inclure l'emplacement, et il effectue une analyse vidéo sur une image de l'emplacement prise par l'appareil de prise de vues pour détecter une activité à l'emplacement afin de confirmer la condition d'alarme détectée par le détecteur de condition.

2. Système de surveillance selon la revendication 1, dans lequel le détecteur de condition est sélectionné à partir d'une classe qui inclut au moins des détecteurs de position, des détecteurs à fenêtre et des détecteurs de mouvement.

3. Système de surveillance selon la revendication 1, dans lequel l'élément de commande par zone détermine l'emplacement pour le détecteur de condition et active l'appareil de prise de vues pour qu'il fournisse l'image de l'emplacement.

4. Système de surveillance selon la revendication 1, dans lequel l'image de l'emplacement est fournie à l'élément de commande par zone.

5. Système de surveillance selon la revendication 1, dans lequel l'élément de commande par zone récupère les coordonnées de détecteur pour le détecteur de condition et dirige le champ de vision de l'appareil de prise de vues pour qu'il inclue le détecteur de condition sur la base des coordonnées de détecteur.

6. Système de surveillance selon la revendication 5, dans lequel l'appareil de prise de vues confirme la présence de la condition d'alarme détectée par le détecteur de condition avant l'émission d'une sortie indiquant une alarme.

7. Système de surveillance selon la revendication 1, dans lequel le détecteur de condition est associé à un type de réponse, et dans lequel le type de réponse inclut un type de réponse indiquant une entrée/sortie, un type de réponse indiquant un périmètre ou un type de réponse indiquant une confirmation d'alarme.

8. Système de surveillance selon la revendication 1, comprenant en outre une pluralité d'appareils de prise de vues couplés à l'élément de commande par zone.

9. Procédé comprenant :
l'utilisation d'un détecteur de condition (14),
le détecteur de condition étant situé au niveau d'un emplacement ;
l'utilisation d'un appareil de prise de vues (16) ;
la réponse à un signal d'alarme provenant du détecteur de condition ;
la récupération, par l'intermédiaire de l'appareil de prise de vues, d'une image de l'emplacement du détecteur de condition ; et
l'exécution d'une analyse vidéo sur l'image pour détecter une activité à l'emplacement afin de confirmer une condition d'alarme détectée par le détecteur de condition.

10. Procédé selon la revendication 9, comprenant en outre l'association de l'emplacement avec le détecteur de condition.

11. Procédé selon la revendication 9, comprenant en outre la fourniture d'une confirmation de la condition d'alarme détectée par le détecteur de condition sur la base de l'analyse vidéo effectuée sur l'image.
